# EUROPEAN PATENT SPECIFICATION

(11) **EP 1 154 448 B1**
(45) Date of publication and mention of the grant of the patent: **22.12.2010**
(21) Application number: 99954556.9
(22) Date of filing: 03.08.1999
(51) Int. Cl.: H01G 9/058

(54) **CAPACITOR WITH DUAL ELECTRIC LAYER**
KONDENSATOR MIT ELEKTRISCHER DOPPELSCHICHT
CONDENSATEUR A COUCHE ELECTRIQUE DOUBLE

(30) Priority: 19.01.1999 US 232712
(43) Date of publication of application: 14.11.2001
(73) Proprietor: Universal Resources AG, 6304 Zug (CH)
(72) Inventor: VARAKIN, Igor Nikolaevich, Saratov, 410017 (RU); STEPANOV, Alexei Borisovich, Saratov, 410003 (RU); MENUKHOV, Vladimir Vasilievich, Saratov, 410015 (RU)
(74) Representative: Andrae, Steffen
(86) International application number: PCT/RU1999/000270
(87) International publication number: WO 2000/044009

(56) References cited:
- EP-A- 0 093 539
- EP-A- 0 786 786
- WO-A-97/07518
- WO-A1-97/07518
- RU-C1- 2 063 085
- RU-C1- 2 121 728

## Description

### Field of the Invention

The invention relates to the field of electrical engineering and particularly to electrochemical capacitors with a double electric layer, it can be used to construct devices storing electric power and can be applied:
- in stand-by power supply systems while working in constant or compensating floating charge mode;
- to provide a constant power supply while using periodically working energy sources, e.g., in a wind and solar power;
- in devices accumulating a power of regenerative braking in transport;
- as traction batteries for the electric transport;
- in devices for starting reliably the internal combustion engines.

### Background of the Invention

Capacitors with a double electric layer with a liquid electrolyte and electrodes made from various materials having large surface area, are already known at the present state of art (US patent Nº 4313084, Int. Cl. H 01 G 9/04, 1982; DE patent N2 3210240, Tnt. Cl. H 01 G 9/04, 1983).

The best results were achieved by using various activated carbon materials to make electrodes. Capacity per unit volume exceeds 2 F/cm³ in such capacitors.

At the same time, the usage of aprotic electrolytes gives a possibility to increase the working voltage up to 2-3 V. (US patent Nº 4697224, Int. C1. H 01 G 9/04, 1987).

However, the usage of carbon materials and organic electrolytes does not allow to get the necessary high power of capacitor with a double electric layer because of the high internal resistance created by a low conductance of the carbon and electrolyte.

Due to the construction improvements of capacitor electrodes, such as using electrically conducting additives to a binding material and applying carbon materials, the charging-discharging current was increased (See "Carbon" magazine, 28, Nº 4, 1990, p. 477-482).

A design of capacitor with a double electric layer including two polarizable electrodes from activated graphite fiber and electrolyte is known (W. Hallop et al. "Cheap supercapacitors", "The 3rd International Seminar on double-layered capacitors and similar sources for storing the power", Florida, 1993).

In this case, in the process of discharging a capacitor, potentials at both electrodes change in opposite directions. As a result, the capacitor voltage goes down twice as quick as the potentials at each of the electrodes. If the electrodes have equal capacitance, then the capacitance of the capacitor is about a half of capacitance of each of the electrodes.

The closest to the proposed solution by the technical essence is a capacitor with a double electric layer including two electrodes, one of which, the polarizable one, being made from a carbon material, and the active material of another one containing nickel hydroxide, their leads and a liquid electrolyte (WO 97/07518, Int. Cl. H 01 G 9/04, 1995).

The most preferred construction material which is used as current leads both for the positive and negative electrodes, is nickel.

However, the electric power produced by this capacitor is too small for such consumers as electric vehicle power sources.

### Summary of the Invention

The problem to be solved by the present invention is to provide a new capacitor with a double electric layer, allowing to accumulate large store of energy due to lead construction.

In the proposed construction the technical result is achieved by creating a capacitor with a double electric layer including two electrodes, one of which, the polarizable one, being made from a carbon material, and an active material of another one containing nickel hydroxide, their leads and a liquid electrolyte, in which, according to the invention, the lead surface of the polarizable electrode is according to the characterizing portion of claim 1, e.g. made from a metal resistant against the electrolyte medium or from carbon.

The lead of the polarizable electrode can also be made entirely from the metal resistant against the electrolyte medium, for instance, from copper. However, the present invention refers to leads included in a capacitor according to claim 1.

Applying copper as a material for the lead of the negative electrode allows to increase the capacitor working voltage. In this case, a voltage for decomposing the alkaline electrolyte increases on the account of increasing the hydrogen extraction overexertion on copper as compared with nickel. In so doing, the working voltage window is 0.8 to 1.6 V.

The increase of the working voltage allows to increase substantially the specific energy of the capacitor.

In order to reduce the construction cost the lead of the polarizable electrode is provided with an inner layer made, for instance, from nickel.

Nickel is rather corrosion-resistant in the alkaline medium over the wide range of potentials, therefore the condition of coating continuity is not obligatory. Nickel is also relatively cheap as compared with noble metals.

The invention is also characterized by that the lead surface of the polarizable electrode is made from silver or gold. The coating thickness in this case is 0.1 to 2 µm.

This allows to widen the working voltage window of the capacitor up to 0.3-1.6 V.

The usage of coating only the lead surface with expensive metals makes the construction cost substantially cheaper.

### Description of the Drawings

The essence of the proposed capacitor with a double electric layer is explained by the following description and examples, as well as by drawings, in which:

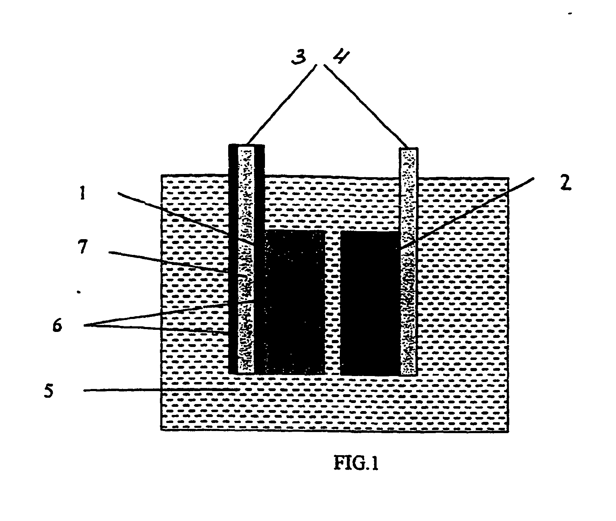

Fig. 1 shows schematically the capacitor construction;
Fig. 2 is a diagram illustrating a module based on the proposed capacitor with a double electric layer.

### Preferred Embodiments of the Invention

In the following several examples, useful to understand the invention, are referred. Among these examples, the embodiments of the invention are those falling within the scope of the appended claims.

A capacitor with a double electric layer includes two electrodes, one of which, the polarizable electrode 1, being made from a carbon material, and an active material of another electrode 2 containing nickel hydroxide, their leads 3, 4 and a liquid electrolyte 5. The surface 6 of the lead 3 of the polarizable electrode 1 is made from a metal resistant against the electrolyte medium or from carbon. It can be silver, copper, gold.

The lead 3 of the polarizable electrode 1 can be provided with an inner layer 7 made, for instance, from nickel.

The lead 3 of the polarizable electrode I can be also made entirely from the metal resistant against the electrolyte medium.

The present invention is described in the following typical examples of embodying the capacitor with a double electric layer.

Example 1. The capacitor with a double electric layer includes two electrodes, one of which is the polarizable negative electrode 1. It can be made from carbon sheets having thickness of 0.35 mm and specific surface area of 900-2000 m/g. The lead 3 located between the carbon sheets can be made from the perforated nickel foil 0.05 mm thick. The lead 3 can be also made from copper, silver or its material can be nickel coated with gold or silver.

The use of such materials for making the lead allows to increase substantially the capacitor working voltage in comparison with the voltage of the capacitor having leads from the nickel foil. As a result, it is possible to increase the capacitor specific energy.

Moreover, the capacitor also includes the non-polarizable electrode 2, which can contain nickel hydroxide as active material. Burnt nickel can be used as a current-conducting base to support an active material.

During the discharge the charged nickel hydroxide (NiOOH) accepts electrons and transfers into a lower valence state (NiOH)₂. The thickness of the electrode 2 from nickel hydroxide can be 0.35 mm, and its specific capacity can be 0.4 Ah/cm³.

Electrolyte, in which the reaction proceeds, can be water solution of potassium hydroxide with the concentration of 6 mole/l. A separator 8, located between the electrodes 1 and 2, can be made from nylon sheet 0.2 thick.

In order to provide the required element capacitance the electrodes can be located in a hermetically sealed container with dimensions of 50x24x 11 mm.

Example 2. Unlike the example 1, the polarizable electrode 0.5 mm thick is made from a carbon powder with a binder. The specific surface of the powder is 1000-1200 m/g.

The lead is made from a perforated copper foil 0.05 mm thick. The element is provided with a valve to release the extra pressure with the operation range of 0.3-1.0 atm.

Example 3. Unlike the example 1, the polarizable electrode 1.0 mm thick is made from a carbon powder with a binder. The specific surface of the powder is 1000-1200 m/g.

The lead is made from a nickel silver-plated foil 0.05 mm thick (a coating is 0.5 mm thick).

The second electrode containing nickel hydroxide contains a nickel-plated polymeric felt as the current-conducting base and active material carrier. The electrode is 0.5 mm thick. The element is provided with a valve to release the extra pressure with the operation range of 0.3-1.0 atm.

Example 4. Unlike the examples 1 and 3, the lead is made from a nickel gold-plated foil 0.05 mm thick (a coating is 0.5 mm thick).

Example 5. Unlike the examples 1 and 4, the lead is made from a nickel foil 0.05 mm thick, coated with carbon by pyrolysis (a coating is 0.7 mm thick).

Electric characteristics of the capacitor with a double electric layer of the given examples are represented in a table (according to the calculated prototype parameters).

**Table**

| No. of the example | Maximum voltage, V | Internal resistance. Ohm | Energy, J/cm³ |
|---|---|---|---|
| 1 | 1,4 | 0,0017 | 45 |
| 2 | 1,7 | 0,0016 | 130 |
| 3 | 1,7 | 0,0025 | 133 |
| 4 | 1,7 | 0,0025 | 133 |
| 5 | 1,8 | 0,003 | 150 |
| 6 - prototype | 1,25 | -- | 4 |

### Industrial Applicability

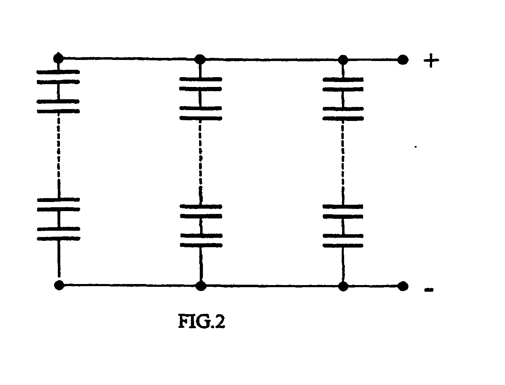

A module 8 can be assembled from the proposed capacitors with a double electric layer (see Fig. 2). The circuit of a possible module includes three units consisting of proposed capacitors connected in series. Each unit includes approximately 100 capacitors with a double electric layer connected in series.

For instance, the module can include capacitors according to the first example of embodiment.

The module can be applied to various systems, for instance, system of the stand-by power supply and system of the uninterrupted power supply.

The proposed capacitor with a double electric layer can store much more energy than a conventional capacitor. This follows from the results presented in the table.

## Claims

1. A capacitor with a double electric layer, the capacitor including two electrodes, one of which, the polarizable electrode (1), being made from a carbon material and the active material of the other electrode (2) containing nickel hydroxide, leads (3, 4) of the two electrodes and a liquid electrolyte (5), **characterized in that** the lead (3) of the polarizable electrode (1) contains on its surface, which is in contact with the polarizable electrode (1), a coating (6) made from a metal resistant against the electrolyte or carbon.

2. The capacitor of claim 1, wherein the coating (6) of the current collector (3) of the polarizable electrode (1) is made from silver.

3. The capacitor of claim 1, wherein the coating (6) of the current collector (3) of the polarizable electrode (1) is made from copper.

4. The capacitor of claim 1, wherein the coating (6) of the current collector (3) of the polarizable electrode (1) is made from gold.

5. The capacitor of any of claims 1 to 4, wherein the coating (6) of the current collector (3) of the polarizable electrode (1) is provided with an inner layer (7) made, for instance, from nickel.

## Patentansprüche

1. Kondensator mit einer elektrischen Doppelschicht, wobei der Kondensator zwei Elektroden, von denen eine, die polarisierbare Elektrode (1), aus einem Kohlenstoffmaterial hergestellt ist und das aktive Material der anderen Elektrode (2) Nickelhydroxid enthält, Anschlussleitungen (3, 4) der beiden Elektroden und einen flüssigen Elektrolyten (5) einschließt, **dadurch gekennzeichnet, dass** die Anschlussleitung (3) der polarisierbaren Elektrode (1) auf ihrer Oberfläche, die sich im Kontakt mit der polarisierbaren Elektrode (1) befindet, eine Beschichtung (6) aufweist, die aus einem Metall, das gegen den Elektrolyten beständig ist, oder aus Kohlenstoff hergestellt ist.

2. Kondensator nach Anspruch 1, wobei die Beschichtung (6) der Stromableitung (3) der polarisierbaren Elektrode (1) aus Silber hergestellt ist.

3. Kondensator nach Anspruch 1, wobei die Beschichtung (6) der Stromableitung (3) der polarisierbaren Elektrode (1) aus Kupfer hergestellt ist.

4. Kondensator nach Anspruch 1, wobei die Beschichtung (6) der Stromableitung (3) der polarisierbaren Elektrode (1) aus Gold hergestellt ist.

5. Kondensator nach irgendeinem der Ansprüche 1 bis 4, wobei die Beschichtung (6) der Stromableitung (3) der polarisierbaren Elektrode (1) mit einer Innenschicht (7) versehen ist, die beispielsweise aus Nickel hergestellt ist.

## Revendications

1. Condensateur comportant une couche électrique double, le condensateur incluant deux électrodes dont une, l'électrode polarisable (1) est réalisée à partir d'un matériau en carbone et le matériau actif de l'autre électrode (2) contient de l'hydroxyde de nickel, des éléments de liaison (3, 4) vers les deux électrodes et un électrolyte liquide (5), **caractérisé en ce que** l'élément de liaison (3) de l'électrode polarisable (1) contient, sur sa surface qui est en contact avec l'électrode polarisable (1), un revêtement (6) réalisé en un métal résistant à l'électrolyte ou en carbone.

2. Condensateur selon la revendication 1, dans lequel le revêtement (6) du collecteur de courant (3) de l'électrode polarisable (1) est réalisé en argent.

3. Condensateur selon la revendication 1, dans lequel le revêtement (6) du collecteur de courant (3) de l'électrode polarisable (1) est réalisé en cuivre.

4. Condensateur selon la revendication 1, dans lequel le revêtement (6) du collecteur de courant (3) de l'électrode polarisable (1) est réalisé en or.

5. Condensateur selon l'une quelconque des revendications 1 à 4, dans lequel le revêtement (6) du collecteur de courant (3) de l'électrode polarisable (1) est pourvu d'une couche intérieure (7) réalisée, par exemple, en nickel.
